# EUROPÄISCHE PATENTSCHRIFT

(11) **EP 2 136 115 B1**
(45) Veröffentlichungstag und Bekanntmachung des Hinweises auf die Patenterteilung: **14.12.2011**
(21) Anmeldenummer: 09162691.1
(22) Anmeldetag: 15.06.2009
(51) Int. Cl.: F16K 17/04, F16K 17/06

(54) **Sicherheitsventil**
Safety valve
Soupape de sécurité

(30) Priorität: 18.06.2008 AT 9722008
(43) Veröffentlichungstag der Anmeldung: 23.12.2009
(73) Patentinhaber: BHDT GmbH, 8605 Kapfenberg (AT)
(72) Erfinder: Lussner, Wolfgang, 8600, Bruck an der Mur (AT)
(74) Vertreter: Wirnsberger, Gernot

(56) Entgegenhaltungen:
- DE-C- 5 369
- SU-A1- 723 260
- SU-A1- 1 046 565
- US-A- 2 973 777
- US-A- 4 201 242

## Beschreibung

Die Erfindung betrifft ein Sicherheitsventil mit einem Einlass und einem Auslass sowie einem Schließelement, das den Einlass abdichtet und sich bei Überdruck bewegt und dadurch einen Weg vom Einlass zum Auslass öffnet, wobei das Schließelement durch zumindest einen Arm mit zumindest einem Federelement verbunden ist, gegen dessen Kraft sich das Schließelement beim Öffnen bewegt, wobei der Arm am Schließelement und am Federelement jeweils um eine Achse schwenkbar gelagert ist.

Heute verwendete Sicherheitsventile sind einerseits hohen Temperaturen, beispielsweise in Dampfkraftwerken aktuell bis zu 560 °C, zukünftig bis zu 700 °C, sowie hohen Drücken bis zu 350 bar ausgesetzt und können andererseits z. B. in der Petrochemie mit äußerst aggressiven Medien wie Säuren in Kontakt kommen.

Bei vielen Sicherheitsventilen werden zum Halten bzw. Zurückbewegen eines Schließelementes eine oder mehrere Federn eingesetzt, wobei man bestrebt ist, die an sich empfindlichen Federn möglichst weit von dem oder den in einem Sicherheitsventil gegebenen Strömungswegen der gegebenenfalls aggressiven und teilweise auf hoher Temperatur befindlichen Medien zu positionieren, um die Federn zu schonen.

Als Federn werden meist solche mit einer linearen Federkennlinie eingesetzt, was allerdings mehrere Nachteile mit sich bringt. Wirkt eine lineare Federkraft auf das Schließelement, so weist dieses beim Öffnen zuerst aufgrund der wirkenden linearen Federkraft ein wenig sensibles Ansprechverhalten auf, weshalb bei mit solchen Federn ausgestatteten Sicherheitsventilen eine unerwünscht hohe Druckdifferenz für das Öffnen des Schließelementes vorzusehen ist. Ein anderer Nachteil besteht darin, dass im Verlauf des Öffnens eine auf das Schließelement wirkende Federkraft zu gering ist, wenn sich dieses über längere Strecken bewegt und einer unter anderem durch einen Impuls eines strömenden Mediums auf das Schließelement wirkenden Kraft eine zu geringe Kraft entgegengesetzt wird. Dies resultiert darin, dass sich das Schließelement nach anfänglich verzögertem Öffnen mit hoher Geschwindigkeit bewegt und letztlich wenig gebremst an anderen Teilen des Sicherheitsventils anstoßen kann, worauf das Schließelement mehrmals um eine Gleichgewichtsposition pendelt, ehe es diese im besten Fall noch erreicht. Dieser Effekt wird in der Fachsprache als "Flattern" bezeichnet.

Gemäß dem Stand der Technik bzw. bekannten Druckschriften ist schon auf verschiedene Arten versucht worden, eine Kraftübertragung eines Federelementes auf ein Schließelement variabel zu gestalten (US 4,201,242; US 2,973,777; DE 198 60 578 A1; US 58,962; JP 08121626 A1; US 5,909,748). Wenngleich durch die in den genannten Druckschriften gewählten Ansätze eine Kraftübertragung zwischen Federelement und Schließelement beeinflusst werden kann, so ist doch nachteilig, dass die vorgeschlagenen Sicherheitsventile äußerst komplex aufgebaut sind, was in Bezug auf die ohnedies besonders hohen Belastungen hinsichtlich Temperatur, Druck und Korrosionsangriff zu Problemen führen kann und daher unbefriedigend ist. Darüber hinaus tragen die bekannten Vorrichtungen bzw. Sicherheitsventile auch nicht dem Umstand gebührend Rechnung, dass sich die Kräfte am Schließelement während dessen Bewegung signifikant ändern.

Aus der SU 723 260 A1 ist ein gattungsgemäßes Sicherheitsventil bekannt geworden, bei dem ein Arm mit einer daran angeordneten Rolle ausgestattet ist und eine seitliche Führung bzw. Kulisse vorgesehen ist, an der die Rolle bzw. der Arm bei Bewegung des Schließelementes entlangrollt.

Aufgabe der Erfindung ist es, ein Sicherheitsventil der eingangs genannten Art so weiterzubilden, dass dieses bei einfachem Aufbau den am Schließelement während dessen Bewegung wirkenden Kräften ausreichend Rechnung trägt, sodass dieses bereits bei geringem Überdruck öffnet, ohne dass jedoch beim weiteren Öffnen ein Flattern auftritt.

Diese Aufgabe wird bei einem Sicherheitsventil der eingangs genannten Art gelöst, wenn der Arm an einer weiteren, zwischen den genannten Achsen angeordneten Achse schwenkbar und gegenüber dieser längs verschiebbar gelagert ist.

Die mit der Erfindung erzielten Vorteile sind insbesondere darin zu sehen, dass durch die vorgesehene Ausbildung einer Verbindung des Schließelementes mit dem Federelement durch einen Arm, der nicht nur um am Schließelement bzw. Federelement befindliche Achsen schwenkbar gelagert ist, sondern auch um eine weitere zwischen den genannten Achsen angeordnete Achse schwenkbar und gegenüber dieser längs verschiebbar ist, quasi ein veränderlicher Hebelarm gegeben ist, was dazu führt, dass auf das Schließelement variable Kräfte wirken, die den am Schließelement insbesondere während dessen Bewegung positionsabhängig wirkenden Kräften optimal Rechnung tragen. Dadurch kann das Schließelement einerseits bereits bei geringen Überdrücken öffnen.

Andererseits steigt nach dem Öffnen des Schließelementes während dessen weiterer Bewegung eine auf das Schließelement wirkende Kraft variabel an, sodass ein Flattern des Schließelementes im Wesentlichen vermieden ist.

Der Arm kann auf beliebige Weise am Schließelement bzw. Federelement um die vorgesehenen Achsen schwenkbar gelagert sein. Um eine möglichst einfache Ausbildung des Sicherheitsventils zu erreichen, ist es jedoch zweckmäßig, dass der Arm mittels Bolzen am Schließelement und am Federelement um die Achsen schwenkbar gelagert ist.

Eine Längsverschiebbarkeit des Armes gleichzeitig mit einer Schwenkbarkeit desselben um eine weitere Achse kann in besonders einfacher Weise realisiert werden, wenn der Arm ein Langloch aufweist, in welches ein weiterer Bolzen eingreift, auf dem der Arm gelagert ist.

Obwohl auch andere Ausführungsvarianten möglich sind, ist es zweckmäßig, dass die Achsen etwa im Bereich von Enden des Armes angeordnet sind, damit eine kompakte bzw. platzsparende Bauweise gegeben ist.

Wenngleich sich das erfindungsgemäße Konzept auf verschiedene Sicherheitsventile anwenden lässt, erweist es sich doch als besonders zweckmäßig, wenn das Schließelement länglich und mit einem vorzugsweise konischen Endstück ausgebildet ist, welches den Einlass abdichtet. Der Arm ist dann besonders bevorzugt an dem dem konischen Endstück gegenüberliegenden Ende des Schließelementes gelagert. Anstelle eines konischen Endstückes kann grundsätzlich auch ein eben ausgebildetes Endstück vorgesehen sein.

Auch das Federelement kann auf unterschiedliche Arten ausgebildet sein, sofern das Schließelement mit einer gewünschten Federkraft beaufschlagt wird. Günstig ist es jedoch, wenn das Federelement einen Längskörper mit einem oberen Federhalter und einem unteren Federhalter sowie einer zwischen oberem Federhalter und unterem Federhalter gehaltenen Feder umfasst, wobei der Längskörper den unteren Federhalter durchsetzt und durch diesen gleiten kann und im Bereich eines über den unteren Federhalter vorspringenden Endes oder eines damit in Verbindung stehenden Fortsatzes mit dem Arm verbunden ist. Dabei ist der untere Federhalter vorzugsweise mit einem konischen Ende ausgebildet. Dies ermöglicht es, dass das konische Ende des unteren Federhalters in einer etwa halbrunden Nut aufliegen kann, wodurch auf besonders einfache Weise die erforderliche Schwenkbarkeit des Federelementes realisiert werden kann, wenn sich das Schließelement und damit der Arm bewegt.

Für die entsprechende Lagerung des konischen Endes in der halbrunden Nut oder ganz allgemein auf einer Auflagefläche erweist es sich als zweckmäßig, dass ein Grundkörper vorgesehen ist, in welchem das Schließelement angeordnet ist und der Grundkörper eine Deckplatte oder eine andere zweckdienlich gestaltete Aufnahme mit einer Ausnehmung aufweist, durch welche das vorspringende Ende des Längskörpers verläuft. Dadurch ist auf einfache Weise eine Auflagefläche für das Federelement gegeben und kann sich der Längskörper im Wesentlichen reibungsfrei bewegen und das Federelement je nach Bedarf kippen. Wenngleich auch andere Ausbildungen möglich sind, steht in einer bevorzugten Ausführungsvariante eines erfindungsgemäßen Sicherheitsventils das Federelement bei einer dichtenden Position des Schließelementes im Wesentlichen vertikal und kippt erst bei Bewegung des Schließelementes bzw. bei Bewegung des Armes.

Das Schließelement kann insbesondere vertikal beweglich ausgeführt sein, wenngleich das Schließelement auch in anderer Weise bewegbar sein kann.

Des Weiteren können bei einem erfindungsgemäßen Sicherheitsventil mehrere, vorzugsweise zwei bis vier, Federelemente vorgesehen sein. Dies erweist sich insbesondere als günstig, wenn eine geringe Bauhöhe des Sicherheitsventils gewünscht ist. Um eine möglichst gleichmäßige Kräfteverteilung am Schließelement zu erreichen, sind die einzelnen Federelemente dabei in Draufsicht auf das Sicherheitsventil vorzugsweise rotationssymmetrisch um das Schließelement angeordnet.

Weitere Merkmale, Vorteile und Wirkungen der Erfindung ergeben sich aus dem nachfolgend dargestellten Ausführungsbeispiel, anhand dessen die Erfindung noch näher erläutert ist. In den anliegenden Zeichnungen, auf die dabei Bezug genommen ist, zeigen:
Fig. 1 einen Querschnitt eines erfindungsgemäßen Sicherheitsventils;
Fig. 2 Teile eines erfindungsgemäßen Sicherheitsventils im geschlossenen Zustand (links) und im teilweise geöffneten Zustand (rechts);
Fig. 3 ein Diagramm betreffend wirkende Kräfte am dichtenden Ende eines Schließelementes;
Fig. 4 eine schematische Darstellung betreffend Kräfteverhältnisse bei einem erfindungsgemäßen Sicherheitsventil.

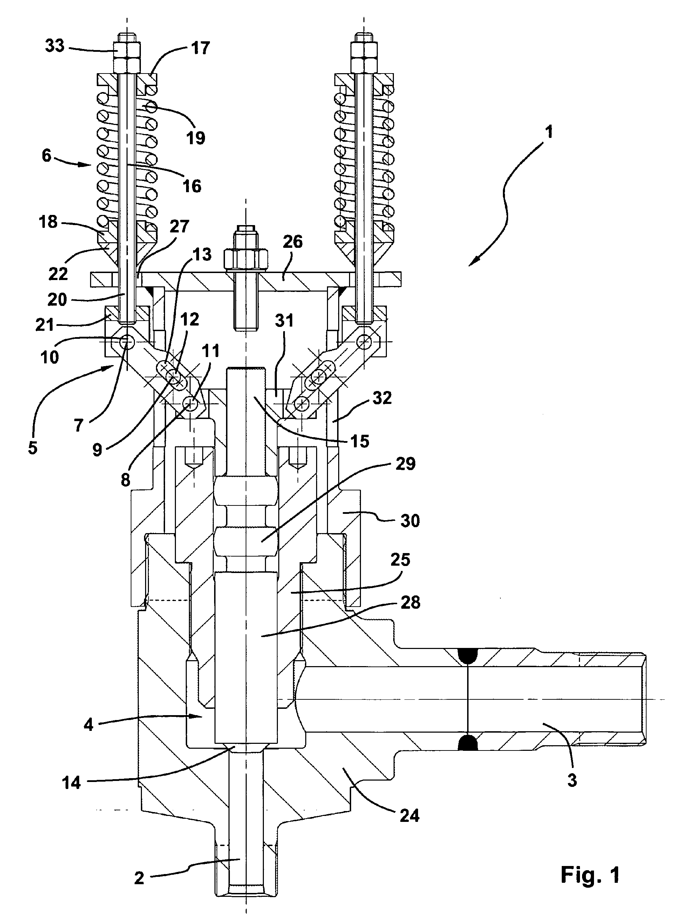

In Fig. 1 ist ein erfindungsgemäßes Sicherheitsventil 1 gemäß einer Ausführungsvariante der Erfindung dargestellt. Das Sicherheitsventil 1 umfasst einen Grundkörper 24 mit einem Einlass 2 und einem Auslass 3. Der Einlass 2 ist mit einer Leitung verbunden, in welcher eine Flüssigkeit, insbesondere ein aggressives Medium, das beispielsweise eine Temperatur von 300 °C aufweist, transportiert wird. Der Einlass 2 ist durch ein Schließelement 4 des Sicherheitsventils 1 abgedichtet, wobei ein konisches Endstück 14 des Schließelementes 4 für die Abdichtung sorgt. In diesem, in Fig. 1 gezeigten Zustand, ist ein Druck einer in einer Leitung transportierten Flüssigkeit zu gering, um das Schließelement 4 aus der dargestellten Position zu bewegen.

Das länglich ausgebildete Schließelement 4 weist im Anschluss an das konische Endstück 14 einen zylindrischen Teil 28 auf, der hohl oder massiv ausgebildet sein kann. Im Anschluss an den zylindrischen Teil 28 ist das Schließelement 4 verjüngt ausgebildet, wobei jedoch zwei Gleitbereiche 29 vorgesehen sind, deren Außendurchmesser jenem des zylindrischen Teils 28 entspricht. Diese Gleitbereiche 29 sind zwischen dem zylindrischen Teil 28 und einem dem konischen Endstück 14 gegenüberliegenden Ende 15 angeordnet.

Das Schließelement 4 ist in einem Sitz 25 vertikal beweglich gehalten. Der Sitz 25 wird seinerseits vom Grundkörper 24 umfasst, in welchem der Einlass 2 und der Auslass 3 verlaufen. Um ein oberes Ende des Grundkörpers 24 herum ist ein Außenteil 30 angeordnet, der seitliche Durchbrechungen 32 aufweist und eine Deckplatte 26 trägt.

Das Schließelement 4 ist im Bereich des dem konischen Endstück 14 gegenüberliegenden Endes 15 von einem T-Stück 31 umgeben. An diesem T-Stück 31 ist ein Arm 5 um eine Achse 8 schwenkbar gelagert, wobei für die schwenkbare Lagerung ein Bolzen 11 vorgesehen ist. Der Arm 5, der beispielsweise aus Stahl besteht, ist im Wesentlichen starr sowie gerade ausgebildet und an seinem anderen Ende an einem Federelement 6 um eine Achse 7 ebenfalls schwenkbar gelagert, wobei für die Lagerung wiederum ein Bolzen 10 vorgesehen ist. Des Weiteren ist der Arm 5, der in der in Fig. 1 gezeigten Situation etwa in einem Winkel von 30° bis 75° an das Schließelement 4 angestellt sein kann, etwa mittig um eine weitere Achse 9 schwenkbar gelagert, wobei wiederum für die Lagerung ein Bolzen 12 eingesetzt wird. Um diesen Bolzen 12 ist der Arm 5 jedoch nicht nur schwenkbar, sondern, weil ein Langloch 13 vorgesehen ist, auch gegenüber der Achse 9 normal zu dieser verschiebbar. Im Bereich des Langlochs 13 kann der Arm 5 oberflächengehärtet sein, damit ein hoher Verschleißwiderstand gegeben ist.

Der Bolzen 10, auf welchem der Arm 5 gelagert ist, um das Federelement 6 mit dem Schließelement 4 zu verbinden, ist Teil eines Fortsatzes 21 des Federelementes 6. Das Federelement 6 besteht aus einem mit dem Fortsatz 21 verbundenen Längskörper 16, der mit einem vorspringenden Ende 20 durch eine Ausnehmung 27 hindurch die Deckplatte 26 durchsetzt und auf der gegenüberliegenden Seite der Deckplatte 26 einen oberen Federhalter 17, einen unteren Federhalter 18 und eine dazwischen befindliche Feder 19 umfasst. Der untere Federhalter 18 liegt in einer in Fig. 1 nicht ersichtlichen Nut 23 der Deckplatte 26 an, und zwar mit einem konischen Ende 22. Der Längskörper 16 kann durch den unteren Federhalter 18, der wie erwähnt auf der Deckplatte 26 anliegt, gleiten, wobei die Feder 19 weiter gespannt wird.

Bei der in Fig. 1 dargestellten Situation ist durch Schrauben 33 eine ausreichende Vorspannung aufgebracht, sodass die Feder 19 des Federelementes 6 den oberen Federhalter 17 nach oben drückt und damit auch den Arm 5 nach oben zieht, wodurch das Schließelement 4 aufgrund der vorgesehenen gelenkigen Verbindung nach unten gedrückt wird. Somit befindet sich das Sicherheitsventil 1 wie dargestellt in geschlossenem Zustand.

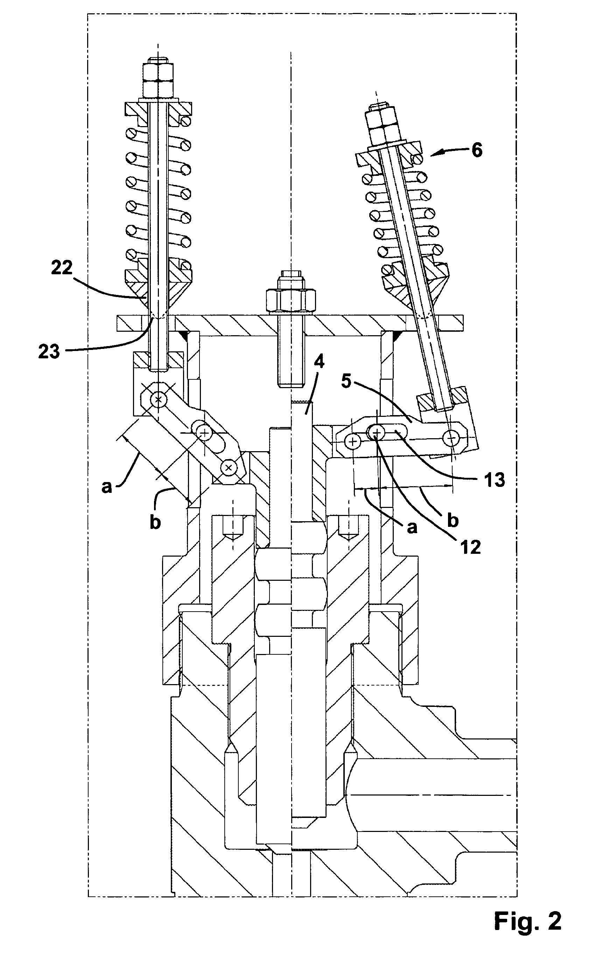

In Fig. 2 ist diese Situation auf der linken Seite nochmals dargestellt, wobei auch die Nut 23, in welcher eine Spitze des konischen Endes 22 anliegt, angedeutet ist. Ist nun ein Überdruck in einer Leitung so groß, dass sich das Schließelement 4 vertikal nach oben bewegt, so schwenkt der Arm 5 aufgrund der gelenkigen Anbindung zum Schließelement 4 und verschiebt sich gleichzeitig um die Achse 9 bzw. den Bolzen 12, sodass sich die Hebelstrecken a, b ändern und temporär die in Fig. 2 auf der rechten Seite dargestellte Lage eingenommen wird, mit deren Erreichung zugleich ein Kippen des Federelementes 6 einhergeht. Wenn der Arm 5 eine waagrechte Lage erreicht hat, befindet sich der Bolzen 12 in einer Grenzposition. Bei weiterer vertikaler Bewegung des Schließelementes 4 bewegt sich der Arm 5 im Bereich einer Verbindung mit dem Federelement 6 nach unten und gleitet gleichzeitig unter Änderung der Hebelstrecken a, b um den Bolzen 12 nach oben, wobei das Federelement 6 schließlich wieder zurückkippt. Ein maximaler Kippwinkel des Federelementes 6 beträgt etwa 30°. Sofern mehrere Federelemente 6 für ein einziges Schließelement 4 vorgesehen sind, was in Bezug auf eine geringe Bauhöhe des gesamten Sicherheitsventils 1 von Vorteil ist, sind die Federelemente 6 so angeordnet, dass sie sich bei maximalem Kippwinkel nicht gegenseitig berühren. In Bezug auf eine platzsparende Bauweise sind Kippwinkel von kleiner als 10° bevorzugt.

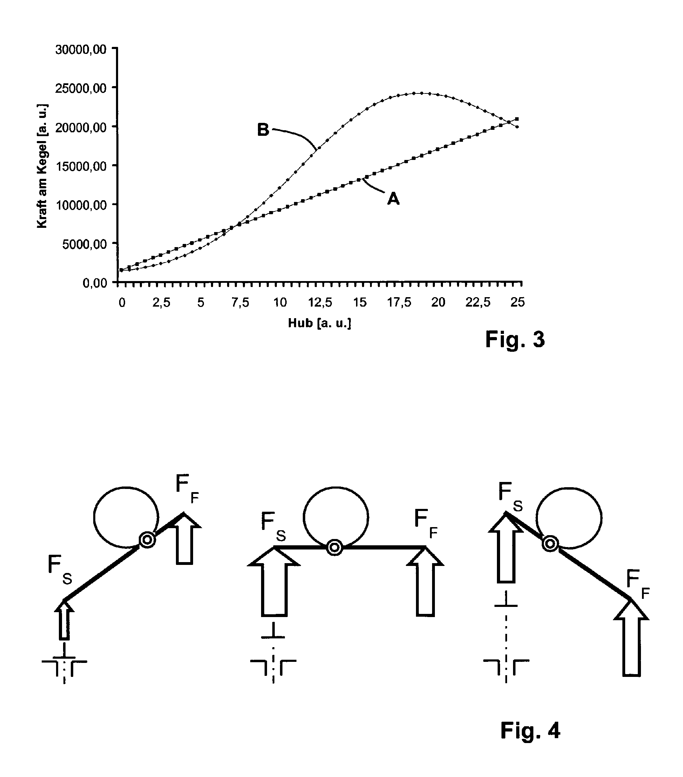

In Fig. 3 ist dargestellt, wie sich die erfindungsgemäße Gestaltung eines Sicherheitsventils 1 auf die am konischen Endstück 14 des Schließelementes 4 gegebenen Kräfte auswirkt. Während bei einer Feder bzw. einem Federelement mit linearer Kennlinie die gemäß Linie A dargestellte Charakteristik erhalten wird, ist der mit einem erfindungsgemäßen Sicherheitsventil 1 erhaltene Kräfteverlauf gemäß Linie B variabel. Wie in Fig. 3 ersichtlich ist, ist zu Beginn eines Hubes des Schließelementes 4 eine Kraft relativ zu einer Kraft einer Feder mit linearer Kennlinie geringer. D. h., dass das Schließelement 4 bereits bei einer geringeren Kraft bzw. bei einem geringeren Überdruck in einer Leitung öffnet. Allerdings nimmt die auf das Schließelement 4 bzw. das konische Endstück 14 wirkende Kraft mit zunehmenden Hub im Vergleich mit einer Feder mit linearer Kennlinie stärker zu, sodass das Schließelement 4 nach Öffnen und bei Weiterbewegung durch die nun größer werdende Kraft gebremst wird, weshalb es sich letztlich sanft einer Endposition nähert, in welcher die Kraft ausführungsbedingt dann abnehmen kann. Durch diese Ausgestaltung ist ein Flattern zumindest weitgehend, im Idealfall vollständig, vermieden.

In Fig. 4 ist schließlich schematisch dargestellt, wie sich die Hebelverhältnisse aufgrund des längs verschiebbaren Armes 5 des erfindungsgemäßen Sicherheitsventils 1 während einer Aufwärtsbewegung des Schließelementes 4 ändern. Wie anhand der Abfolge (von links nach rechts) von einer dichtenden Position des Schließelementes 4 über eine halb geöffnete Position bis hin zu einer vollständig geöffneten Position ersichtlich ist, kann durch eine Kombination von Schwenkbarkeit und Längsverschiebbarkeit des Armes 5 den während einer Bewegung des Schließelementes 4 wirkenden Kräften F_{S} durch variable Gegenkräfte F_{F} gezielt Rechnung getragen werden. Dabei ist insbesondere berücksichtigt, dass auf das konische Ende 14 bzw. das Schließelement 4 zu Beginn des Öffnens lediglich statische Kräfte wirken, wohingegen im Zuge einer weiteren Bewegung des Schließelementes 4 bzw. eines weiteren Öffnens desselben auch dynamische Kräfte zugegen sind, denen durch die vorgesehene Ausbildung des Sicherheitsventils 1 adäquat entgegengewirkt wird.

## Patentansprüche

1. Sicherheitsventil (1) mit einem Einlass (2) und einem Auslass (3) sowie einem Schließelement (4), das den Einlass (2) abdichtet und sich bei Überdruck bewegt und **dadurch** einen Weg vom Einlass (2) zum Auslass (3) öffnet, wobei das Schließelement (4) durch zumindest einen Arm (5) mit zumindest einem Federelement (6) verbunden ist, gegen dessen Kraft sich das Schließelement (4) beim Öffnen bewegt, wobei der Arm (5) am Schließelement (4) und am Federelement (6) jeweils um eine Achse (7, 8) schwenkbar gelagert ist, **dadurch gekennzeichnet, dass** der Arm (5) an einer weiteren, zwischen den genannten Achsen (7, 8) angeordneten Achse (9) schwenkbar und gegenüber dieser längs verschiebbar gelagert ist.

2. Sicherheitsventil (1) nach Anspruch 1, **dadurch gekennzeichnet, dass** der Arm (5) mittels Bolzen (10, 11) am Schließelement (4) und am Federelement (5) um die Achsen (7, 8) schwenkbar gelagert ist.

3. Sicherheitsventil (1) nach Anspruch 1 oder 2, **dadurch gekennzeichnet, dass** der Arm (5) ein Langloch (13) aufweist, in welches ein weiterer Bolzen (12) eingreift, auf dem der Arm (5) gelagert ist.

4. Sicherheitsventil (1) nach einem der Ansprüche 1 bis 3, **dadurch gekennzeichnet, dass** die Achsen (7, 8) etwa im Bereich von Enden des Armes (5) angeordnet sind.

5. Sicherheitsventil (1) nach einem der Ansprüche 1 bis 4, **dadurch gekennzeichnet, dass** das Schließelement (4) länglich und mit einem vorzugsweise konischen Endstück (14) ausgebildet ist, welches den Einlass (2) abdichtet, und der Arm (5) am dem konischen Endstück (14) gegenüberliegenden Ende (15) des Schließelementes (4) gelagert ist.

6. Sicherheitsventil (1) nach einem der Ansprüche 1 bis 5, **dadurch gekennzeichnet, dass** das Federelement (6) einen Längskörper (16) mit einem oberen Federhalter (17) und einem unteren Federhalter (18) sowie einer zwischen oberem Federhalter (17) und unterem Federhalter (18) gehaltenen Feder (19) umfasst, wobei der Längskörper (16) den unteren Federhalter (18) durchsetzt und durch diesen gleiten kann und im Bereich eines über den unteren Federhalter (18) vorspringenden Endes (20) oder eines damit in Verbindung stehenden Fortsatzes (21) mit dem Arm (5) verbunden ist.

7. Sicherheitsventil (1) nach Anspruch 6, **dadurch gekennzeichnet, dass** der untere Federhalter (18) mit einem konischen Ende (22) ausgebildet ist.

8. Sicherheitsventil (1) nach Anspruch 7, **dadurch gekennzeichnet, dass** das konische Ende (22) des unteren Federhalters (18) in einer etwa halbrunden Nut (23) aufliegt.

9. Sicherheitsventil (1) nach einem der Ansprüche 6 bis 8, **dadurch gekennzeichnet, dass** ein Grundkörper (24) vorgesehen ist, in welchem das Schließelement (4) angeordnet ist, und der Grundkörper (24) eine Deckplatte (26) mit einer Ausnehmung (27) aufweist, durch welche das vorspringende Ende (20) des Längskörpers (16) verläuft.

10. Sicherheitsventil (1) nach einem der Ansprüche 6 bis 9, **dadurch gekennzeichnet, dass** das Federelement (6) bei einer dichtenden Position des Schließelementes (4) im Wesentlichen vertikal steht.

11. Sicherheitsventil (1) nach einem der Ansprüche 1 bis 10, **dadurch gekennzeichnet, dass** das Schließelement (4) vertikal beweglich ist.

12. Sicherheitsventil (1) nach einem der Ansprüche 1 bis 11, **dadurch gekennzeichnet, dass** mehrere, vorzugsweise zwei bis vier, Federelemente (6) vorgesehen sind.

13. Sicherheitsventil (1) nach Anspruch 12, **dadurch gekennzeichnet, dass** die Federelemente (6) in Draufsicht rotationssymmetrisch um das Schließelement (4) angeordnet sind.

## Claims

1. A safety valve (1) with an inlet (2) and an outlet (3) and a closure element (4), which seals the inlet (2) and is moved in the presence of excess pressure and thus opens a path from the inlet (2) to the outlet (3), wherein the closure element (4) is connected by at least one arm (5) to at least one spring element (6), against the force whereof the closure element (4) is moved when opening, wherein the arm (5) is mounted in a swivellable manner on the closure element (4) and on the spring element (6) in each case about an axis (7, 8), **characterised in that** the arm (5) is mounted on a further axis (9) disposed between the aforesaid axes (7, 8) in a swivellable manner and longitudinally displaceable with respect to the latter.

2. The safety valve (1) according to claim 1, **characterised in that** the arm (5) is mounted in a swivellable manner about the axes (7, 8) by means of bolts (10, 11) on the closure element (4) and on the spring element (5).

3. The safety valve (1) according to claim 1 or 2, **characterised in that** the arm (5) comprises an oblong hole (13), into which a further bolt (12), on which the arm (5) is mounted, engages.

4. The safety valve (1) according to any one of claims 1 to 3, **characterised in that** the axes (7, 8) are disposed roughly in the region of the ends of the arm (5).

5. The safety valve (1) according to any one of claims 1 to 4, **characterised in that** the closure element (4) is constituted oblong and with a preferably conical end piece (14) which seals the inlet (2), and the arm (5) is mounted on the end (15) of the closure element (4) lying opposite the conical end piece (14).

6. The safety valve (1) according to any one of claims 1 to 5, **characterised in that** the spring element (6) comprises an oblong body (16) with an upper spring holder (17) and a lower spring holder (18) as well as a spring (19) held between the upper spring holder (17) and the lower spring holder (18), wherein the oblong body (16) penetrates the lower spring holder (18) and can slide through the latter and is connected to the arm (5) in the region of an end (20) projecting beyond the lower spring holder (18) or an extension (21) connected thereto.

7. The safety valve (1) according to claim 6, **characterised in that** the lower spring holder (18) is constituted with a conical end (22).

8. The safety valve (1) according to claim 7, **characterised in that** the conical end (22) of the lower spring holder (18) rests in an approximately semicircular groove (23).

9. The safety valve (1) according to any one of claims 6 to 8, **characterised in that** a base body (24) is provided, in which the closure element (4) is disposed, and the base body (24) comprises a cover plate (26) with a cutout (27), through which the projecting end (20) of the oblong body (16) runs.

10. The safety valve (1) according to any one of claims 6 to 9, **characterised in that** the spring element (6) stands essentially vertically in a sealing position of the closure element (4).

11. The safety valve (1) according to any one of claims 1 to 10, **characterised in that** the closure element (4) is vertically mobile.

12. The safety valve (1) according to any one of claims 1 to 11, **characterised in that** a plurality, preferably two to four, spring elements (6) are provided.

13. The safety valve (1) according to claim 12, **characterised in that** the spring elements (6) are disposed in plan view rotation-symmetrically about the closure element (4).

## Revendications

1. Soupape de sécurité (1) avec une entrée (2) et une sortie (3) ainsi qu'un élément de fermeture (4) rendant l'entrée (2) étanche et se déplaçant en cas de surpression, ouvrant ainsi une voie entre l'entrée (2) et la sortie (3), dans laquelle l'élément de fermeture (4) est relié à au moins un élément à ressort (6) par au moins un bras (5), contre la force duquel l'élément de fermeture (4) se déplace lors de l'ouverture, le bras (5) étant monté de façon pivotante autour d'un axe (7, 8) respectif sur l'élément de fermeture (4) et sur l'élément à ressort (6), **caractérisée en ce que** le bras (5) est monté de façon pivotante sur un autre axe (9) disposé entre les axes (7, 8) mentionnés, tout en étant monté de façon à pouvoir coulisser dans la longueur par rapport à celui-ci.

2. Soupape de sécurité (1) selon la revendication 1, **caractérisée en ce que** le bras (5) est monté de façon pivotante autour des axes (7, 8) sur l'élément de fermeture (4) et sur l'élément à ressort (5) au moyen de boulons (10, 11).

3. Soupape de sécurité (1) selon la revendication 1 ou 2, **caractérisée en ce que** le bras (5) comporte un trou oblong (13) dans lequel s'introduit un autre boulon (12) sur lequel est monté le bras (5).

4. Soupape de sécurité (1) selon l'une des revendications 1 à 3, **caractérisée en ce que** les axes (7, 8) sont disposés environ dans la région des extrémités du bras (5).

5. Soupape de sécurité (1) selon l'une des revendications 1 à 4, **caractérisée en ce que** l'élément de fermeture (4) est formé en longueur et avec une pièce finale (14) de préférence conique rendant étanche l'entrée (2), et le bras (5) est monté à l'extrémité (15) de l'élément de fermeture (4) qui est opposée à la pièce finale conique (14).

6. Soupape de sécurité (1) selon l'une des revendications 1 à 5, **caractérisée en ce que** l'élément à ressort (6) comprend un corps longitudinal (16) avec un support de ressort supérieur (17) et un support de ressort inférieur (18) ainsi qu'un ressort (19) maintenu entre le support de ressort supérieur (17) et le support de ressort inférieur (18), où le corps longitudinal (16) traverse le support de ressort inférieur (18) et peut glisser à travers celui-ci, tout en étant relié au bras (5) dans la région d'une extrémité (20) faisant saillie sur le support de ressort inférieur (18) ou d'un prolongement (21) relié à celle-ci.

7. Soupape de sécurité (1) selon la revendication 6, **caractérisée en ce que** le support de ressort inférieur (18) est formé avec une extrémité conique (22).

8. Soupape de sécurité (1) selon la revendication 7, **caractérisée en ce que** l'extrémité conique (22) du support de ressort inférieur (18) repose dans une rainure (23) à peu près semi-circulaire.

9. Soupape de sécurité (1) selon l'une des revendications 6 à 8, **caractérisée en ce qu'**il est prévu un corps de base (24) dans lequel est disposé l'élément de fermeture (4), et le corps de base (24) comporte une plaque couvrante (26) avec un évidement (27) à travers lequel s'étend l'extrémité saillante (20) du corps longitudinal (16).

10. Soupape de sécurité (1) selon l'une des revendications 6 à 9, **caractérisée en ce que** l'élément à ressort (6) est disposé essentiellement verticalement lorsque l'élément de fermeture (4) se trouve dans une position d'étanchéité.

11. Soupape de sécurité (1) selon l'une des revendications 1 à 10, **caractérisée en ce que** l'élément de fermeture (4) peut être déplacé verticalement.

12. Soupape de sécurité (1) selon l'une des revendications 1 à 11, **caractérisée en ce qu'**il est prévu plusieurs éléments à ressort (6), de préférence deux à quatre.

13. Soupape de sécurité (1) selon la revendication 12, **caractérisée en ce que** vus d'au-dessus, les éléments à ressort (6) sont disposés de façon symétrique en rotation autour de l'élément de fermeture (4).
